# EUROPEAN PATENT APPLICATION

(11) **EP 3 489 615 A1**
(43) Date of publication of application: **29.05.2019**
(21) Application number: 17203466.2
(22) Date of filing: 24.11.2017
(51) Int. Cl.: F41G 3/02, G06T 7/00, F41G 3/14, F41G 3/06, F41G 3/16

(54) **A USER INTERFACE DEVICE FOR A GUNFIRE DETECTION SYSTEM**

(71) Applicant: HENSOLDT Sensors GmbH, 82024 Taufkirchen (DE)
(72) Inventor: Wirag, Daniel, 88682 Salem (DE); Sorg, Tobias, 88633 Heiligenberg (DE); König, Thomas, 88212 Ravensburg (DE); Stoel, Evert, 88090 Immenstaad am Bodensee (DE); Klasen, Stephanus, 88690 Uhldingen-Mühlhofen (DE)
(74) Representative: LifeTech IP Spies & Behrndt Patentanwälte PartG mbB

(57) **Abstract**

A user interface device (100) for a gunfire detection system is disclosed, wherein the detection system comprises one or more environment sensors for detecting gunshots, the sensors include a thermal imaging system, a camera system, and a shooter locator system. The user interface device comprises: a receiver unit (110), a processing unit (120), and a display unit (130). The receiver unit (110) is configured to receive data associated with the following environment information: thermal information provided by the thermal imaging system, optical information provided by the camera system, gunshot information provided by the shooter locator system. The processing unit (120) is configured to process the received data and to provide image data for a radar view component, a thermal view based on the thermal information, a combined view based on the thermal information and the optical information, and a shot history view based on the gunshot information. The display unit (130) is controllable by the processing unit (120) and configured to display the radar view component as part of at least one of the following view modes: the thermal view, the combined view, and the shot history view. The radar view component is adapted to indicate, when derivable from the gunshot information, one or more positions or directions of one or more detected gunshots.

## Description

The present invention relates to a user interface device for a gunfire detection system and, in particular, to a human-machine interface of a multi-sensor based hostile gunfire detection system.

### Background

In the event of an attack with a firearm (e.g. by a sniper), hostile fire detection systems not only detect the shooting, but also analyze the situation based on information provided by multiple environment sensors to possibly derive a position or other information about the shooter or the shooting. These multiple sensors include, for example, an acoustic shot detection system, infrared camera systems, or so-called PTZ-cameras (PTZ = pan-tilt-zoom) and others, and the analysis may include a fusion of information to confirm a detected shooting event or to obtain supplementary information (position of or distance to the sniper, number of sniper, kind of gunshots, etc.).

Although the generated information may represent a significant amount of data, the results should be presented quickly and clearly for enabling prompt countermeasures. In addition, since hostile fire attacks may cause a tremendous stress situation to all potential victims, it is essential to provide this complex information in a most efficient, humanly comprehensible and operable way to users of the shoot detection system.

Due to the constantly increasing amount of available information, conventional user interfaces for shoot detection systems do not meet these requirements anymore. Therefore, there is a demand for new user interface devices.

### Summary of the Invention

At least some of the problems are overcome by a user interface device according to claim 1. The dependent claims refer to further advantageous realizations.

The present invention relates to a user interface device for a gunfire detection system. The detection system comprises one or more environment sensors for detecting gunshots, wherein the environment sensors include a thermal imaging system, a camera system, and a shooter locator system. The user interface device comprises: a receiver unit, a processing unit, and a display unit. The receiver unit is configured to receive data associated with the following environment information: thermal information provided by the thermal imaging system, optical information provided by the camera system, gunshot information provided by the shooter locator system. The processing unit is configured to process the received data and to provide image data for a radar view component, a thermal view based on the thermal information, a combined view based on the thermal information and the optical information, and a shot history view based on the gunshot information. The display unit is controllable by the processing unit and configured to display the radar view component as part of at least one of the following view modes: the thermal view, the combined view, and the shot history view. The radar view component is adapted to indicate, when derivable from the gunshot information, one or more positions or directions of one or more detected gunshots.

The environment sensors may include various cameras (optical or infrared or 3D-cameras, PTZ-camera, etc.), one or more acoustic sensors including one of more microphones to detect gunshots.. The detected gunshots are in particular hostile gunshots, for example from a sniper, whose position are not known in advance.

Optionally, the user interface device further comprises a selector for selecting one of the view modes in response to a user interaction.

Optionally, the thermal imaging system, the camera system, and the shooter locator system are configured to provide 360-degree surround information.The processing unit may be configured to provide image data for the radar view component as a compass.

Optionally, the processing unit is further configured to provide image data for the combined view to visualize a combination of all available environment information provided by the one or more environment sensors.

Optionally, the processing unit is further configured to image data for the combined view mode to depict a 360-degree thermal view together with an optical view of an angular section of a 360-degree real time view, the angular section being highlighted in the 360-degree thermal view. The angular section may be highlighted using bars and/or by using a specific color.

Optionally, the shooter locator is configured to classify gunshots in three different classes as follows: Class A gunshots with a known position of a shot origin, Class B gunshots with at least one known angular sector of the gunshot origin, Class C gunshots with unknown origin. The processing unit is configured to provide image data for the radar view component to indicating the detected class of gunshots (e.g. by specific symbols, geometric objects, colors, etc.).

Optionally, the shot history view is adapted to provide at least one of the following information about detected gunshots: distance to the shot origin, time of detection, time period between an actual time and time of detection, angular values defining one or more sectors of potential sniper position.

Optionally, the shooter locator system is adapted to provide a gunshot message to the processing unit upon detection of at least one of the gunshots class and, upon receiving the gunshot message, the processing unit is configured to initiate the processing of the data. For example, the gunshot message is a trigger signal to start or update the data processing. The analysis of a gunshot may, for example, include an analysis of an acoustic noise characteristic.

Optionally, the processing unit is adapted to prioritize the gunshot information for displaying on the radar view component based on the classification as follows: Class A gunshots are displayed with highest priority, and class B gunshots are displayed with highest priority in case no Class A gunshot was detected in a previous predetermined time period (e.g. during the last 20, 40, or 60 seconds).

Optionally, the processing unit is further configured to provide at least one of the following functions:
- to control the camera system to capture a different angular region upon tapping a spot on the thermal view or another view;
- to detect from the processed received data a moving object and optionally to provide a motion tracking of the moving object by highlighting the moving object (optionally the object may also be identified);
- to archive detected gunshots for later inspection using the shot history view;
- to update the displayed view mode triggered by the gunshot signal provided by the shooter locator system;
- to interpret gesture interactions by a user and to control the display unit accordingly (e.g. zooming, centering, moving the displayed image).

Optionally, the processing unit is adapted to filter and/or to merge relevant gunshot information to limit a number of displayed gunshots. For example, multiple gunshots within a merge area (e.g. within a radius of 30 m or 50 m or 100 m) are merged and displayed as a single event. The filtering may be performed based on one or more of the following: a shooting intensity, a distance to the detected gunshot, the direction to the detected gunshot.

Optionally, the receiving unit is a wireless communication device and the user interface device is a handheld device. The interface device is, in particular, a tablet.

The present invention relates also to a hostile gunfire detection system with one or more environment sensors for detecting gunshots, wherein the sensors may include a thermal imaging system and/or a camera system and/or a shooter locator system, and a user interface device as defined before.

The present invention relates also to a method for visualizing information provided by environmental sensors. The sensors include a thermal imaging system, an optical camera system, and a shooter locator system. The method comprises:
- receiving data associated with the following environment information: thermal information provided by the thermal imaging system, optical information provided by the camera system, gunshot information provided by the shooter locator system;
- processing the received data and providing image data for a radar view component, a thermal view based on the thermal information, a combined view based on the thermal information and the optical information, and a shot history view based on the gunshot information; and
- displaying the radar view component as part of at least one of the following view modes: the thermal view, the combined view, and the shot history view,
wherein the radar view component is adapted to indicate, when derivable from the gunshot information, one or more positions or directions of one or more detected gunshots.

This method may also be implemented in software or a computer program product. Therefore, embodiment relate also to a computer program having a program code for performing the method, when the computer program is executed on a processor.

Advantageous aspects of the various embodiments can be summarized as follows:
The invention provides an intuitive visualization of hostile fire information, which results from a real-time fusion and analysis of acoustic, thermal and visual optical sensor information. The hostile fire information may, for example, include information indicating a direction, a distance, a thermal or a visual optical profile of a possible sniper. The graphical user interface may offer a 360-degree thermal profile picturing of the surrounding environment related to a visual optic picturing, and an acoustic profiling in case of shoot detections. Furthermore, a special logic may be implemented on the processing unit to prioritize the visualization of the gunshot information.

It is understood that features of the graphical user interface device may be implemented in software installable on various visualization devices to support potential targets of hostile fire attacks. The graphical user interface concept further supports an analysis and visualization of multi-sensor information which originates from multiple interlinked hostile fire detection systems. This way, effectiveness and efficiency of situational awareness is upgraded.

Particular advantages include:
- a reduction of user-reaction time and improved situational awareness in situations of hostile fire arm attacks;
- realizing intuitive and user-comprehensible access to complex safety relevant information in critical situations;
- information grade enhancement of multi-sensor data by applying techniques of correlation fusion and analysis.

### Brief Description of the Drawings

Various embodiments of the present invention will be described in the following by way of examples only, and with respect to the accompanying drawings, in which:
- Fig. 1: depicts a user interface device for a gunfire detection system according to an embodiment of the present invention.
- Fig. 2: illustrates a possible visualization of different gunshot classes.
- Fig. 3: depicts an embodiment for this Radar View Component for a Case A gunshot detection.
- Fig. 4A-4D: depict a possible shot class symbology used in the Radar View Component.
- Fig. 5: depicts an embodiment for the thermal view mode including the Radar View Component.
- Fig. 6: depicts an embodiment for the combined view mode realizing visualization based on a combination of all available sensor information.
- Fig. 7: depicts an embodiment of this shot history view mode.
- Fig. 8: shows further details of an exemplary shot history list with information about all detected shots.
- Fig. 9: illustrates a logic implementing a shot event prioritized processing.
- Figs.10A-10E: depict possible gestures for interaction with the graphical user interface.
- Fig. 11: depict a flow diagram of a method for visualizing information provided by environmental sensors.

### Detailed Description

Various examples will now be described more detail with reference to the accompanying drawings in which some examples are illustrated.

The terminology used herein is for the purpose of describing illustrative examples only and is not intended to be limiting. As used herein, the singular forms "a," "an" and "the" are intended to include the plural forms as well, unless the context clearly indicates otherwise. It will be further understood that the terms "comprises," "comprising," "includes" and/or "including," when used herein, specify the presence of stated features, steps, operations, elements and/or components, but do not preclude the presence or addition of one or more other features, steps, operations, elements, components and/or groups thereof.

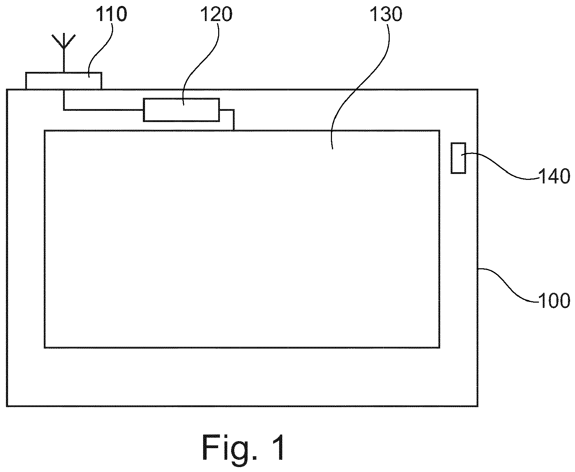

**Fig. 1** depicts an embodiment for the user interface device 100 for a gunfire detection system. The detection system (not shown) comprises one or more environment sensors for detecting gunshots, wherein the sensors include a thermal imaging system and/or a camera system and/or a shooter locator system. The user interface device 100 comprises: a receiver unit 110, a processing unit 120, and a display unit 130. The receiver unit 110 is configured to receive data associated with the following environment information: thermal information provided by the thermal imaging system, optical information provided by the camera system, gunshot information provided by the shooter locator system. The processing unit 120 is configured to process the received data and to provide image data for
- a radar view component,
- a thermal view based on the thermal information,
- a combined view based on the thermal information and the optical information, and
- a shot history view based on the gunshot information.
The display unit 130 is controllable by the processing unit 120 and configured to display the radar view component as part of at least one of the following view modes: the thermal view, the combined view, and the shot history view. The radar view component is adapted to indicate, when derivable from the gunshot information, one or more positions or directions of one or more detected gunshots.

The user interface device 100 further comprises a selector 140 for selecting one of the view modes in response to a user interaction. The selector 140 may be a button implemented in software or as hardware.

The receiving unit 110 as depicted in Fig. 1 may comprise a wireless receiving unit, for example based on a wireless data transmission standard (such as a mobile communication, wi-fi, Bluetooth, etc.), for example, if the user interface device 100 is a tablet or any other mobile device. The receiving unit 110 may, however, also include a wire-based communication interface to receive the data on a connection wire. The one or more environment sensors may include an acoustic fire detection system with one or more microphones to detect acoustically a shooting event and/or to determine the direction, from which the shooting event has originated.

Embodiments of the interface device 100 relate also to a Human-Machine Interface (HMI) of a multi-sensor based hostile gunfire detection system. The HMI 100 visualizes information provided by one or more of the following environmental sensors:
- Shot information by a 360 degree shooter locator system,
- Thermal information by a 360 degree thermal camera system,
- Optical information by a pan/tilt/zoom daylight camera system.

The shooter locator system may comprise a 360 degree acoustic shooter locator system which may trigger the gunshot information processing based on an analysis of a gunshot's acoustic noise characteristics. After a successful detection, the output of the shooter locator may be classified into 3 different classes which are visualized accordingly in the HMI 100. This classification may be computed onboard the sensor itself or in the processing unit 120.

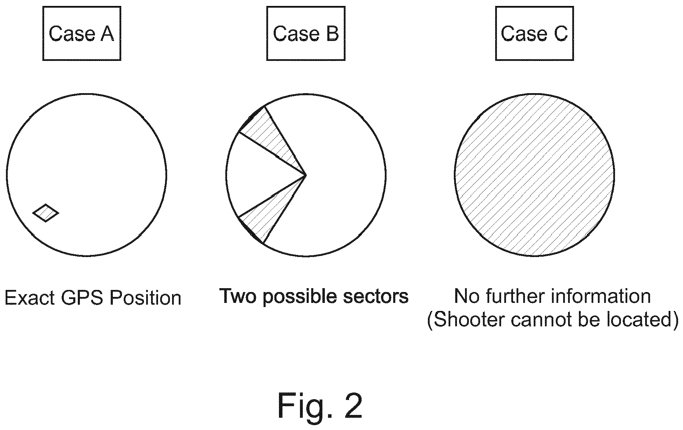

**Fig. 2** depict a possible visualization of the different classes, wherein based on the quality of shot detection the following classes are defined:
1. Case A
   An exact position (e.g. GPS-position) of the shot origin could be calculated.
2. Case B
   The shot origin could not be determined precisely. Instead two angular sectors as potential shot origins are provided (e.g. as highlighted).
3. Case C
   No shot origin or angular sectors could be determined.

For each Case the encompassing circle in Fig. 2 represents the 360 degree detection range of the shooter locator system, wherein black or other highlieghted areas denote possible locations of the shooter.

According to embodiments the multiple view modes of the graphical user interface 100 is further specified as follows:
1. The Thermal View Mode is adapted for thermal profile picturing of the surrounding environment under surveillance.
2. The Combined View Mode is adapted to visualize a combination of 360-degree thermal profile picturing and an optical picturing displaying the daylight camera's field-of-view.
3. The Shot History View Mode is adapted to give detailed information of detected shot events.

The switch (selector 140) can used to easily switch between these three views modes via a button press. This switch may also be implemented on a touch screen by a respective symbol.

All view modes include a so-called Radar View Component (e.g. obtained from the acoustic Shooter Locator System; SLS) which subsumes shot information provided by the 360-degree shooter locator system.

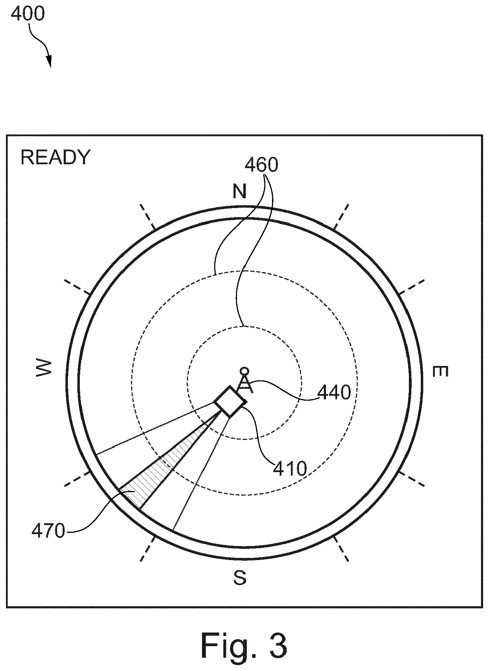

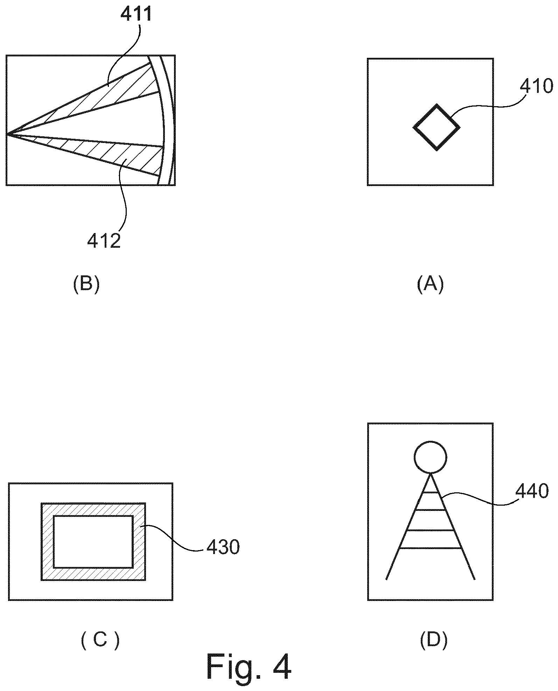

**Fig. 3** depicts an embodiment for this Radar View Component 400 for a Case A gunshot detection. As shown this view component may depict a compass figure enriched with possibly colored symbols specific to shot classification. The shot class symbology used in the Radar View Component 400 are illustrated in Figs. **4A-4D.**

Fig. 4A shows a possibly colored diamond 410 marking the origin of a case A gunshot, Fig. 4B depicts two possibly colored triangular sections 411, 412 indicating possible directions from which a case B gunshot may have originated. Fig. 4C depicts a possibly colored rectangle 430 marking the position of the graphical user interface device, and Fig. 4D depicts a possibly colored mast 440 marking the position of the exemplary acoustic shooter locater system. The symbols in Figs. 4A and 4B indicating the hostile gunshot may be red and the symbols in Figs. 4C and 4D indicating a friendly infrastructure may be green (although the invention should not be limited on specific colors).

The compass in Fig. 3 is used for expressing the position 410 and/or a direction 470 of detected gunshots. Coordinates used for positioning and distance calculation may be measured relative to the position of the acoustic shooter locator system 440, wherein detections of Case A gunshots may - besides its origin 410 and direction 470 - also provide the distance of the shot origin 410 from the location of the shot detection system 440. This distance may be obtained by embedded, e.g. green-colored, circumferences 460 (radial sectors) drawn with a dashed line. The circumferences 460 embedding each other have a distance that may correspond to 50 m in reality. It will be appreciated that other scales may be used as well (e.g. 10 m, 100 m, etc. between two neighboring dashed lines). This way shot origin positions are marked precisely in a 2-dimensional depiction.

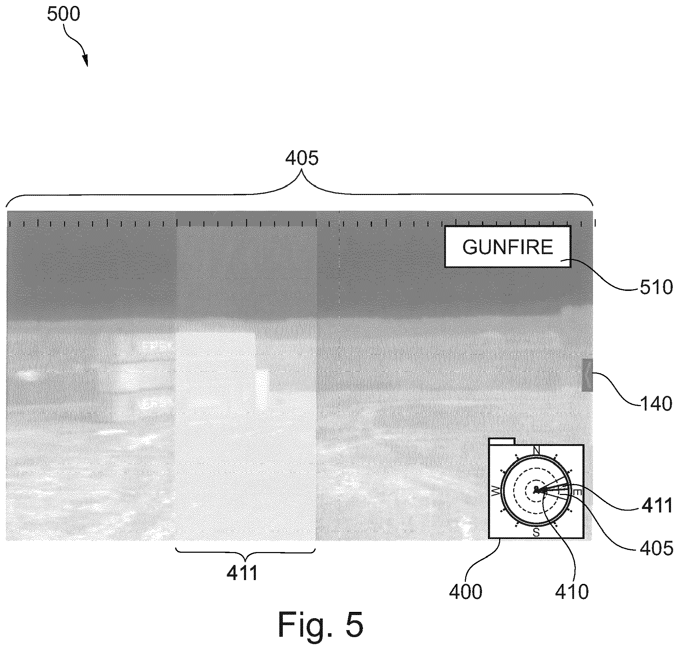

**Fig. 5** depicts an embodiment for the thermal view mode 500 including the radar view component 400 illustrating information provided by the thermal sensor which records thermal profile pictures. The optional selector 140 is placed on the right-hand side of the display. The radar view component 400 is, as an example, integrated into the lower right corner of the thermal view 500. The thermal view mode 500 may allow various interactions. For example, the following gestures may be implemented:
- Zoom-in and zoom-out via touch gestures,
- Navigating in horizontal (o - 360 degree) and vertical direction via swipe gestures.
- The radar view component 400 shows, with a highlighted triangle 405, the direction of the horizontal field-of-view of the selected radar view image.

Examples for the gestures will be described in further detail below.

In addition, **Fig. 5** illustrates an exemplary Case A gunshot indicated in the radar view component 400 by the diamond 410 and the angular sector 411 indicating the direction of the Case A gunshot. At the same time the angular sector 411 is represented as a highlighted area 411 in the thermal view. Optionally, an optical alert 510 may appear on the thermal view mode indicating the detected gunshot. The optical alert 510 may be accompanied by an acoustical alarm.

Additionally, the thermal view mode 500 may provide motion tracking (not shown in **Fig. 5**). For example, moving objects may be identified and surrounded by rectangles (or other geometric objects or otherwise highlighted) in the graphical view. The such highlighted moving object may be followed in the view.

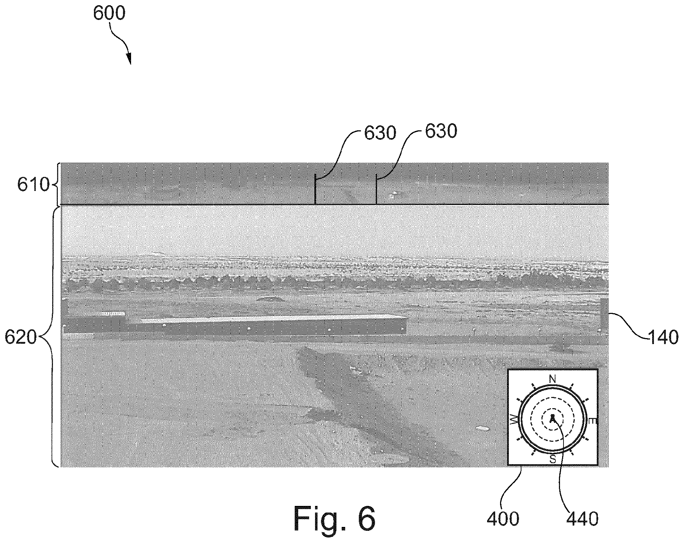

**Fig. 6** depicts an embodiment for the combined view mode 600 realizing visualization based on a combination of all available sensor information. As an example, the graphical user interface is split into the following sections:
- The very upper section includes a 360 degree panorama view 610 based on thermal sensor information.
- In the upper 360 degree view 610, North may always be shown in the center (horizontally) of the view 610.
- In the upper 360 degree real-time view 610, the direction and horizontal field-of-view of the optical view 620 are depicted by two vertical bars 630 (e.g. green bars) or otherwise highlighted.
- Immediately following the upper section 610, going downwards, an optical real-time view 620 in the direction of the optical sensor orientation may be displayed. The view covers the optical sensor field-of-view dimensions as indicated by the bars 630 in the real-time view.
- Analogous to the thermal view mode 500, the radar view component 400 may be placed into the lower right corner of the combined view mode 600.

**Fig. 6** depicts the 360-degree thermal view 610, as an example, in an upper portion of the combined view mode 600, above the optical picture 620 displaying the marked region 630 of the thermal view 610. According to other embodiments, the thermal view 610 can also be depicted below the real-time view 620. Moreover, the radar view component 400 may be placed at any portion of the combined view mode (for example in the lower left corner). In particular, in the event of a shooting, the radar view component 400 may be moved to a location on the screen where no shooting has been detected.

**Fig. 6** indicates the selector 140 also at the right edge of the combined view 600, where the user can switch to another view by tapping on this area of the display.

Also in this view mode, several user interactions may be supported. For example, tapping a spot in the (upper) thermal view part 610 of the interface 100 may make the visual optical view 620 to rotate and focus the corresponding section. A change in optical view 620 will move the vertical exemplary bars 630 in the upper 360-degree real-time view 610 to reflect the new optical field of regard and horizontal field-of-view. The visual optical view 620 may likewise support zoom-in and zoom-out via standard pinch gestures (see below). The visual optical view 620 may also support navigation in horizontal (e.g. o - 360 degree) and/or vertical direction (e.g. 0-90 degree) via standard swipe gestures.

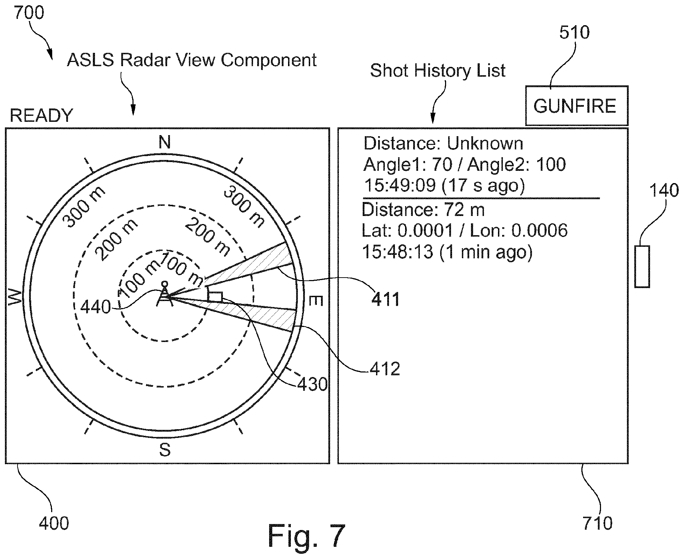

**Fig. 7** depicts an embodiment of this shot history view mode 700, wherein all detected gunshots (e.g. from a sniper) may be archived and inspected, e.g. by displaying a shot history list 710. Besides the listing of all detected shots the view may also include the radar view component 400 which graphically depicts directions and positions of shots listed in history list. The shot history list 710 may be placed on the right half of the view 700.

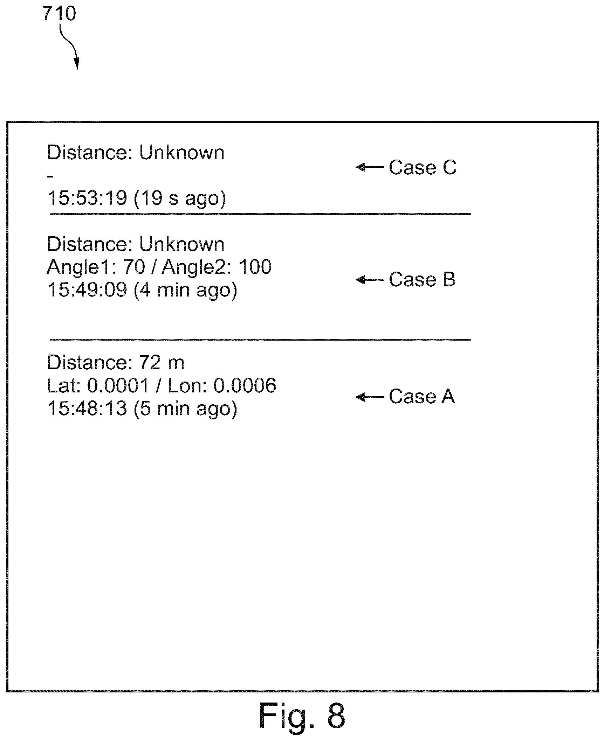

**Fig. 8** shows further details of an exemplary shot history list 710 with information about all detected shots. Depending on the detected shot case (see also Fig. 2), this list may include the following information:
- Case A detection (see bottom entry):
   ∘ Distance of the sniper position to the detection system [m],
   ∘ GPS position (latitude, longitude coordinate] of the sniper,
   ∘ Time of the detection [hh:mm:ss],
   ∘ Time difference of actual time to the detection time [s]
- Case B detection (see middle entry):
   ∘ Distance of the ambiguous sniper position to the system is marked as "Unknown",
   ∘ Orientation of both sectors containing the potential sniper position. Values define sector bisector angles [degree],
   ∘ Time of the detection [hh:mm:ss],
   ∘ Time difference of actual time to the detection time [s]
- Case C detection (see first entry):
   ∘ Distance of the sniper position to the system is marked as "Unknown",
   ∘ Time of the detection [hh:mm:ss],
   ∘ Time difference of actual time to the detection time [s].

Of cource, the information depicted upon each detection may differ. Likewise, the format of the sensor data may be different. For example, distances may also be given in other units such as feet.

According to further embodiments the received and subsequently saved information is processed in accordance to the needs. For example, in order to preserve a comprehensive situational awareness of the surrounding environment and not to overwhelm the user with non-relevant gunshot information, sophisticated filter and fusion methods may be applied as part of the data rendering before visualization in the graphical user interface.

As part of this processing shot information updates in the interface may be triggered by so-called shot events, e.g. triggered by a gunshot signal received from the acoustic shooter locator system, wherein specific updates for all view mode 500, 600, 700 may be performed in parallel.

In case a shot event is detected the different view modes may be updated as follows:
- The Thermal View Mode 500 gives up-to-date thermal profile imaging of the surrounding area under surveillance. Areas of detections of shots may be colored (Case A and Case B detections), see Fig. 5.
- The Combined View Mode 600 gives both up-to-date thermal profile imaging 610 (see Fig. 6) as well as daylight imaging 620 of the surrounding area under surveillance.
- The Shot History View Mode 700 is updated with the latest shot information, i.e. the Shot History List 710 and the Compass Radar View Component 400 are updated.
- The Radar View Component 400 (see Fig. 3) shows information of directions and distances of the actual detected shot origin.

As another part of the processing, shot events may trigger a gunshot alarm 510, as, e.g., depicted in Figs. 5 and 7. This alarm may include a red-colored textual overlay "GUNFIRE" 510 in the upper right corner of any view mode. In addition, an acoustic warning may be issued, e.g. an emission of an alarming vocal message "Shot" and any other clearly recognizable acoustic sound.

Optionally, according to further embodiments the processing may also include a prioritization.

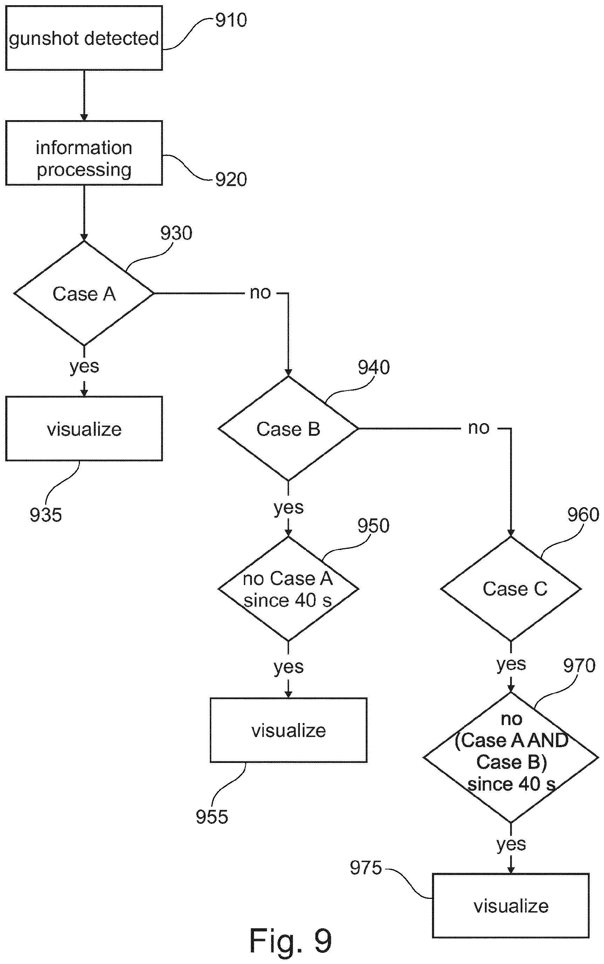

**Fig. 9** illustrates a logic implementing such shot event prioritized processing, wherein the processed sensory gunshot information is prioritized according to its classification level. This logic effectively maintains situational awareness.

For example, in case a gunshot has been detected at stage 910 the respective information is processed at stage 920. In case the processed information indicates that a Case A gunshot, the result is visualized at stage 930. In case no Case A gunshot has been detected, the system evaluates at stage 940, whether a Case B gunshot has been detected. If this is true, the system analyzes, whether a Case A gunshot has been detected in a previous 40-seconds time window at stage 950. If this is true, the result is visualized again at stage 955. Otherwise the Case A gunshot remains visible. If no Case B gunshot has been detected at stage 940, the system analyzes whether a Case C gunshot has been detected at stage 960. If this is true, the system determines at stage 970, whether no Case A gunshot and no Case B gunshot were detected in the previous 40-seconds time window, the system visualizes the result at step 975.

Therefore, Case A gunshot events are always handled with highest priority, i.e. respective information is passed for visualization immediately and overrides all lower priority (remaining) running operations on the interface device 100.

Case B gunshot events will be handled with highest priority, i.e. respective information is passed for visualization immediately, provided that no Case A gunshot was detected since a time window of 40 seconds (prioritization time interval) immediately before the Case B gunshot event. Otherwise Case B gunshot events will not cause a gunshot alarm in the HMI.

Case C gunshot events will be handled with highest priority, i.e. respective information is passed for visualization immediately, provided that neither Case A nor Case B gunshots were detected since a time period of 40 seconds (prioritization time interval) immediately before the Case C gunshot event. Otherwise Case C gunshot events will not cause a gunshot alarm in the GUI.

The prioritization time interval may be modified according to user needs in a configuration file of the graphical user interface. Instead of 40 seconds, the time interval may last for 20 seconds or 50 seconds or 60 seconds, etc.

Yet another issue of the data processing is to prevent cluttering the Radar View Component 400 with gunshot symbology. For this, a logic covering intuitive symbology for visualization may be applied. This logic may only take actions for Case A gunshot detections, when related shot origins have a distance of, e.g., less than 50 m in between. For this situation shots may be marked by the same diamond symbol 410 in the Radar View Component 400 and not with separate symbols. The distance used for this symbology merge may be modified according to user needs in the configuration file of the graphical user interface (e.g. instead for 50 m, it may be 10 m or 100 m).

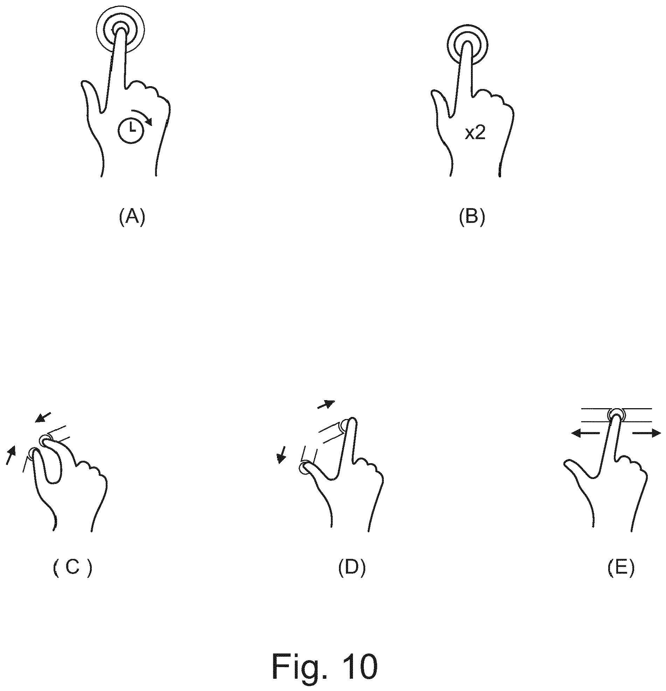

**Fig. 10A-10E** depict possible gestures for interaction with the graphical user interface.

Fig. 10A depicts a touch gesture. For example, touching a sector of the compass in the radar view component 400 will focus the system view towards the respective direction. The applicable view modes (for example thermal view mode 500 including the radar view component 400 or the combined view mode 600) of the interface device 100 will adapt accordingly. In case a touch gesture is performed in the combined view mode 600, for example in the thermal panorama view 610, this touch gesture will move the optical view 620 towards the touched spot.

Fig. 10B illustrates a double touch gesture. If this double touch gesture is used in the combined view mode 600 (e.g. in the optical view 620), this gesture will center the view to the touched spot.

Fig. 10C depicts a pinch close gesture. If a pinch close gesture is used in the thermal view mode 500, this will zoom out the field-of-view relative to the pinch center. If a pinch close gesture is used in the combined view 600, for example in the optical view 620, this gesture will zoom out the field-of-view relative to the pinch center.

Fig. 10D depicts a pinch open gesture. If this pinch open gesture is used in the thermal view 500, the field-of-view is zoomed out relative to the Thermal View's pinch center. If the pinch open gesture is used in the combined view mode 600, e.g. in the optical view 620, this gesture will zoom in the field-of-view relative to the pinch center.

Fig. 10E depicts a swipe gesture. If this swipe gesture is used in the thermal view mode 500, the thermal view is moved according to the swipe direction.

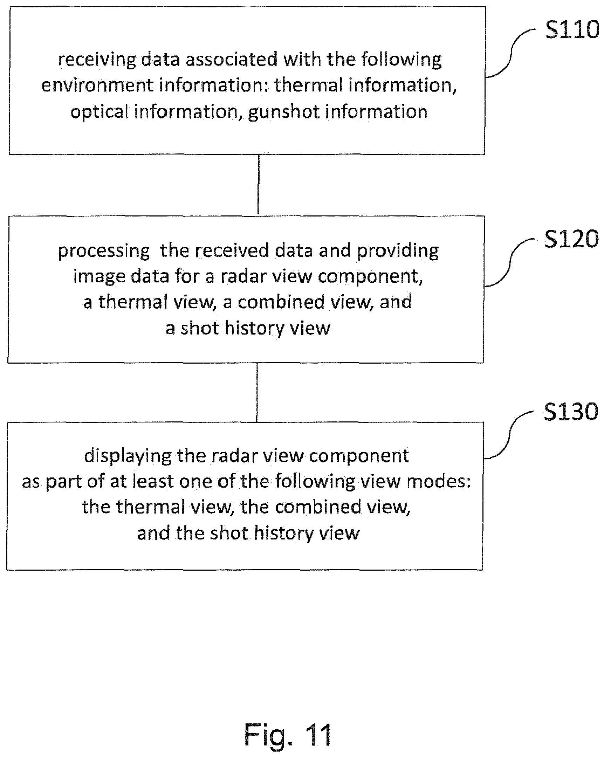

**Fig. 11** depicts a flow chart of a method for visualizing information provided by environmental sensors. The method comprises the steps of:
- receiving S110 data associated with the following environment information: thermal information provided by the thermal imaging system, optical information provided by the camera system, gunshot information provided by the shooter locator system;
- processing S120 the received data and providing image data for a radar view component 400, a thermal view 500 based on the thermal information, a combined view 600 based on the thermal information and the optical information, and a shot history view 700 based on the gunshot information; and
- displaying S130 the radar view component 400 as part of at least one of the following view modes: the thermal view 500, the combined view 600, and the shot history view 700,
wherein the radar view component 400 is adapted to indicate, when derivable from the gunshot information, one or more positions or directions 410, 411, 470 of one or more detected gunshots.

This method may also be a computer-implemented method. A person of skill in the art would readily recognize that steps of various above-described methods may be performed by programmed computers. Embodiments are also intended to cover program storage devices, e.g., digital data storage media, which are machine or computer readable and encode machine-executable or computer-executable programs of instructions, wherein the instructions perform some or all of the acts of the above-described methods, when executed on the computer or processor.

Furthermore, while each embodiment may stand on its own as a separate example, it is to be noted that in other embodiments the defined features can be combined differently, i.e. a particular feature descripted in one embodiment may also be realized in other embodiments. Such combinations are covered by the disclosure herein unless it is stated that a specific combination is not intended.

### List of reference signs

- 100: user interface device
- 110: receiver unit
- 120: processing unit
- 130: display unit
- 140: selector (switch)
- 400: radar view component
- 405: direction/sector of the horizontal field-of-view
- 410,411, 470: positions, directions, sectors of gunshots
- 430: location of the interface device
- 440: shooter locator system
- 460: radial sectors around the shooter locator system
- 500: thermal view
- 510: optical alert
- 600: combined view
- 610: thermal view
- 620: optical view
- 630: highlighted area in the thermal view indicating the optical field-of-view
- 700: shot history view
- 710: shot history list
- 910-975: stages during prioritizing of shot events

## Claims

1. A user interface device (100) for a gunfire detection system, the detection system comprising one or more environment sensors for detecting gunshots, the sensors including a thermal imaging system, a camera system, and a shooter locator system, the user interface device (100) comprising:
a receiver unit (110) configured to receive data associated with the following environment information: thermal information provided by the thermal imaging system, optical information provided by the camera system, gunshot information provided by the shooter locator system; and
a processing unit (120) configured to process the received data and to provide image data for a radar view component (400), a thermal view (500) based on the thermal information, a combined view (600) based on the thermal information and the optical information, and a shot history view (700) based on the gunshot information; and
a display unit (130) controllable by the processing unit (120) and configured to display the radar view component (400) as part of at least one of the following view modes: the thermal view (500), the combined view (600), and the shot history view (700),
wherein the radar view component (400) is adapted to indicate, when derivable from the gunshot information, one or more positions or directions (410, 411, 470) of one or more detected gunshots.

2. The user interface device (100) according to one of the preceding claims, further comprising a selector (140) for selecting one of the view modes in response to a user interaction.

3. The user interface device (100) according to claim 1 or claim 2, wherein the thermal imaging system, the camera system, and the shooter locator system are configured to provide 360-degree surround information for the detected gunshot and the processing unit (120) is configured to provide image data for the radar view component (400) as a compass.

4. The user interface device (100) according to one of the preceding claims, wherein the processing unit (120) is configured to provide image data for the combined view (600) to visualize a combination of all available environment information provided by the one or more environment sensors.

5. The user interface device (100) according to claim 4, wherein the processing unit (120) is configured to provide image data for the combined view mode (600) to depict a 360-degree thermal view (610) together with an optical view (620) of an angular section (630) of a 360-degree real time view, the angular section (620) being highlighted in the 360-degree thermal view (610).

6. The user interface device (100) according to one of the preceding claims, wherein the shooter locator is configured to classify gunshots in three different classes as follows:
Class A gunshots with a known position of a shot origin,
Class B gunshots with at least one known angular sector of the gunshot origin,
Class C gunshots with unknown origin,
wherein the processing unit (120) is configured to provide image data for the radar view component (400) to indicating the detected class of gunshots.

7. The user interface device (100) according to claim 6, wherein the shot history view is adapted to provide at least one of the following information about detected gunshots: distance to the shot origin, time of detection, time period between an actual time and time of detection, angular values defining sectors of a potential sniper position.

8. The user interface device (100) according to one of the preceding claims, wherein the shooter locator system is adapted to provide a gunshot signal to the processing unit (120) upon detection of at least one of the gunshots and, upon receiving the gunshot signal, the processing unit (120) is configured to initiate the processing the data.

9. The user interface according to one of claims 6 to 8, wherein the processing unit (120) is adapted to prioritize the gunshot information for displaying on the radar view component (400) based on the classification as follows: Class A gunshots are displayed with highest priority, and class B gunshots are displayed with highest priority in case no Class A gunshot was detected in a previous predetermined time period.

10. The user interface device (100) according to claim 8 or claim 9, wherein the processing unit (120) is configured to provide at least one of the following functions:
- to control the camera system to capture a different angular region upon tapping a spot on the thermal view;
- to detect from the processed received data a moving object and to provide a motion tracking of the moving object by highlighting the moving object;
- to archive detected gunshots for later inspection using the shot history view (710);
- to update the displayed view mode triggered by the gunshot signal provided by the shooter locator system
- to interpret gesture interactions by a user and to control the display unit (130) accordingly.

11. The user interface device (100) according to one of the preceding claims, wherein the processing unit (120) is adapted to filter and/or to merge relevant gunshot information to limit a number of displayed gunshot,
wherein multiple gunshots within a merge area are merged and displayed as a single event and the filtering is performed based on one or more of the following: a shooting intensity, a distance to the detected gunshot, the direction to the detected gunshot.

12. The user interface device (100) according to one of the preceding claims, wherein the receiving unit (110) is a wireless communication device and the user interface device (100) is a handheld device, in particular a tablet.

13. Hostile gunfire detection system with:
one or more sensors for detecting gunshots, the sensors including a thermal imaging system, a camera system, and a shooter locator system; and
a user interface device (100) according to one of the preceding claims.

14. A method for visualizing information provided by environmental sensors, the sensors including a thermal imaging system, a camera system, and a shooter locator system, the method comprising:
receiving (S110) data associated with the following environment information: thermal information provided by the thermal imaging system, optical information provided by the camera system, gunshot information provided by the shooter locator system;
processing (S120) the received data and providing image data for a radar view component (400), a thermal view (500) based on the thermal information, a combined view (600) based on the thermal information and the optical information, and a shot history view (700) based on the gunshot information; and
displaying (S130) the radar view component (400) as part of at least one of the following view modes: the thermal view (500), the combined view (600), and the shot history view (700),
wherein the radar view component (400) is adapted to indicate, when derivable from the gunshot information, one or more positions or directions (410, 411, 470) of one or more detected gunshots.

15. A computer program having a program code for performing the method of claim 14, when the computer program is executed on a computer or processor.
